# EUROPEAN PATENT APPLICATION

(11) **EP 1 306 040 A1**
(43) Date of publication of application: **02.05.2003**
(21) Application number: 02021828.5
(22) Date of filing: 27.09.2002
(51) Int. Cl.: A47J 31/24, A47J 31/40

(54) **Infusion dispenser assembly, particularly for espresso coffee machines**

(30) Priority: 26.10.2001 IT MI20012263
(71) Applicant: Omnimatic S.p.A., 20083 Gaggiano (Milan) (IT)
(72) Inventor: Mestek, Claudio, 20127 Milan (IT)
(74) Representative: Modiano, Guido, Dr.-Ing.

(57) **Abstract**

An infusion dispenser assembly, particularly for espresso coffee machines, which comprises a dispenser body (1) that forms an infusion chamber (2) in which a lower or dispensing piston (3) can move. A compensation spring (10) is also provided which acts between the bottom of the infusion chamber (2) and the lower face of the lower piston (3). Under the lower piston (3), protection means (20) are provided which form, during dispensing of the infusion, a chamber of non-pressurized air for accommodating the compensation spring (10).

## Description

The present invention relates to an infusion dispenser assembly, particularly for espresso coffee machines.

As is known, superautomatic machines for making espresso coffee use dispenser assemblies which generally comprise a lower piston or dispensing piston, which forms, in cooperation with an infusion piston or upper piston, the region where the coffee powder is introduced.

The infusion water, released by the infusion piston, passes through the lower piston and is dispensed externally.

A compensation spring normally acts on the lower face of the lower piston and has two functions: the first one is to allow a reduced stroke of the lower piston in case the dose of coffee powder is excessive, and the second one is to provide a compression reaction on the coffee pellet in order to squeeze out the water contained therein, before expelling the coffee powder pellet.

The spring is therefore normally in a chemically aggressive environment, since it is struck by the water infused with the coffee, which over time tends to dirty the spring and the sliding stem, which is connected to the lower piston.

This fact, over time, can cause damage or sticking in the correct operation of the dispenser assembly.

The aim of the invention is indeed to eliminate the drawbacks mentioned above, by providing an infusion dispenser assembly, particularly for espresso coffee machines, that allows to provide adequate protection of the compensation spring, preventing it from making contact with the coffee infusion or with the water.

Within this aim, an object of the invention is to provide a dispenser assembly in which the stem of the infusion piston is protected, consequently reducing the possibilities of seizure of the assembly.

Another object of the present invention is to provide an infusion dispenser assembly that by virtue of its constructive characteristics is capable of giving the greatest assurances of reliability and safety in use.

Still another object of the invention is to provide an infusion dispenser assembly that can be obtained easily starting from commonly commercially available elements and materials and is furthermore competitive from a purely economical standpoint.

This aim and these and other objects that will become better apparent hereinafter are achieved by an infusion dispenser assembly, particularly for espresso coffee machines, according to the present invention, which comprises a dispenser body that forms an infusion chamber in which a lower piston or dispensing piston can move, a compensation spring being also provided which acts between the bottom of said infusion chamber and the lower face of said lower piston, characterized in that it comprises, under said lower piston, protection means which form, during the dispensing of the infusion, a chamber of non-pressurized air that accommodates said compensation spring.

Further characteristics and advantages will become better apparent from the description of a preferred but not exclusive embodiment of an infusion dispenser assembly, particularly for espresso coffee machines, illustrated by way of non-limitative example with the aid of the accompanying drawings, wherein:

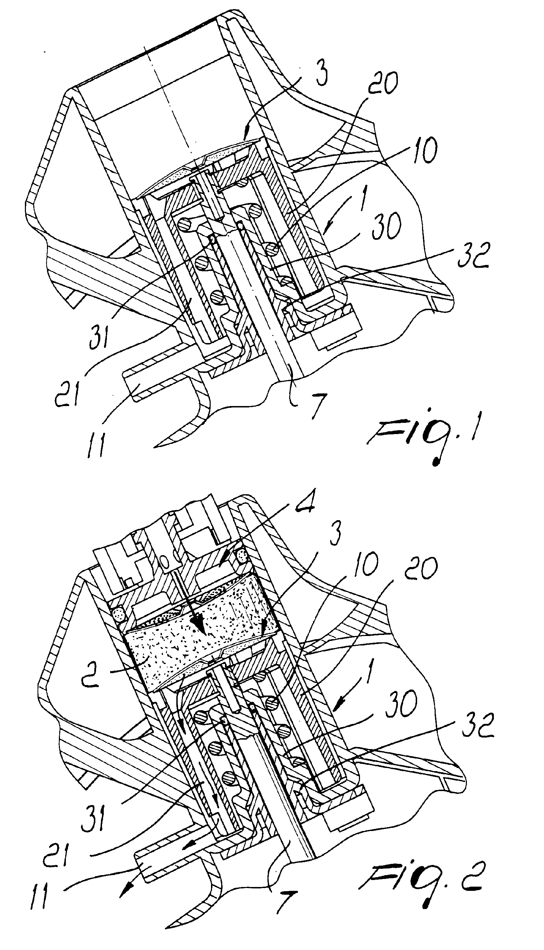

Figure 1 is a schematic view of the infusion dispenser assembly, with the lower piston in the position for loading the coffee powder;
Figure 2 is a view of the dispenser assembly with the lower piston in the infusion position.

With reference to the figures, the infusion dispenser assembly particularly for espresso coffee machines according to the present invention comprises a dispenser body, generally designated by the reference numeral 1, which forms internally an infusion chamber 2 in which a lower piston or dispensing piston, generally designated by the reference numeral 3, can move.

For the sake of completeness in description, it is noted that an upper piston or infusion piston 4 can be inserted in the infusion chamber.

There is also a compensation spring 10, which is accommodated in the infusion chamber and is arranged so as to act between the bottom of the infusion chamber 2, where the infusion output duct 11 is provided, and he lower face of the lower piston 3.

The particularity of the invention is constituted by the fact that below the lower piston 3 there are protection means that form, during the dispensing of the infusion, a chamber of non-pressurized air that accommodates the compensation spring 10.

Said protection means are constituted by a cylindrical skirt 20, which protrudes from the lower face of the piston 3 and forms a mostly axial dispensing duct 21 provided in the part that corresponds to the output duct.

The spring 10 is fitted on an axial tang 30, which protrudes from the bottom of the chamber 2 and through which the stem 7 of the lower piston 3 passes hermetically.

The axial tang 30, outside the infusion chamber, accommodates a sealing O-ring 31, which engages on the stem 7 and is kept in position by a connecting element 32 that is forced inside the cylindrical cavity formed by the tang 30.

With the arrangement described above, during infusion the region that accommodates the compensation spring 10 and the stem 7 that performs the translational motion of the lower piston 3 is not affected by the passage of the infusion, which is dispensed outward by means of the duct 21 and the output duct 11.

With this refinement, the compensation spring 10 is in practice accommodated in a chamber with non-pressurized air in which the liquid cannot enter, thus preventing corrosion phenomena and sticking caused by deposits.

From the above description it is thus evident that the invention achieves the intended aim and objects, and in particular the fact is stressed that the infusion dispenser assembly according to the present invention allows to improve the reliability of the system because onerous maintenance operations are avoided.

For the sake of completeness in description, is it also noted that the compensation spring 10, in addition to performing the compensation function, also has the purpose of squeezing the coffee powder pellet after the infusion has been dispensed and before said pellet is expelled.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2001A002263 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An infusion dispenser assembly, particularly for espresso coffee machines, comprising a dispenser body (1) that forms an infusion chamber (2) in which a lower or dispensing piston (3) can move, a compensation spring (10) being also provided which acts between the bottom of said infusion chamber (2) and the lower face of said lower piston (3), **characterized in that** it comprises, under said lower piston (3), protection means (20) which form, during the dispensing of the infusion, a chamber of non-pressurized air that accommodates said compensation spring (10).

2. An infusion dispenser assembly according to claim 1, **characterized in that** said protection means comprise a cylindrical skirt (20) that protrudes from the lower face of said lower piston (3) and forms a dispensing duct (21) that runs substantially parallel to the axis of said infusion chamber (2).

3. The infusion dispenser assembly according to the preceding claims, **characterized in that** the dispensing duct (21) is arranged at an output duct (11) formed in the lower part of said infusion chamber (2).

4. The infusion dispenser assembly according to one or more of the preceding claims, **characterized in that** it comprises, on the bottom of said infusion chamber (2), an axial tang (30) for fitting said spring (10) thereon.

5. The infusion dispenser assembly according to one or more of the preceding claims, **characterized in that** said axial tang (30) comprises sealing means (31) for the passage of the stem (7) connected to said lower piston (3).

6. The infusion dispenser assembly according to one or more of the preceding claims, **characterized in that** said sealing means comprise an O-ring (31) that engages on said stem (7), externally to said infusion chamber (2), and is kept in position by a connecting element (32) that is forced inside a cylindrical cavity formed by said tang (30).
